# EUROPEAN PATENT SPECIFICATION

(11) **EP 0 374 903 B1**
(45) Date of publication and mention of the grant of the patent: **31.07.1996**
(21) Application number: 89123593.9
(22) Date of filing: 20.12.1989
(51) Int. Cl.: C08J 7/12, C08G 61/08

(54) **Process for producing flame-retarded polymer molded articles**
Verfahren zur Herstellung von flammhemmenden polymeren Formteilen
Procédé de production d'objets moulés en polymère retardateur de flamme

(30) Priority: 20.12.1988 JP 319460/88; 20.12.1988 JP 319461/88; 05.04.1989 JP 84639/89
(43) Date of publication of application: 27.06.1990
(73) Proprietor: HERCULES INCORPORATED, Wilmington Delaware 19894 (US)
(72) Inventor: Hara, Shigeyoshi,, Yamaguchi-ken, (JP); Endo, Zen-ichiro,, Yamaguchi-ken, (JP); Nakatani, Umewaka,, Yamaguchi-ken, (JP)
(74) Representative: Lederer, Franz, Dr.

(56) References cited:
- EP-A- 0 367 095
- US-A- 3 220 993
- US-A- 3 816 286
- US-A- 4 296 151
- DATABASE WPIL, no. 83-23302k, Columbus, Ohio, US; & JP-A-58 013 637
- Houben-Weyl, Methoden der organischen Chemie, vol. V/3, Georg Thieme Verlag, Stuttgart/Germany 1962, page 783

## Description

### BACKGROUND OF INVENTION

### a. Industrial Applicability

The present invention relates to a polymer molded article prepared by the simultaneous polymerization and molding of metathesis polymerizable cycloolefins in the presence of a metathesis polymerization catalyst.

More particularly, the invention relates to a process for producing a modified polymer molded article having improved flame-retardance and other properties by contacting said polymer molded article with a halogen molecule, a halogen halide, a halogenation agent, hydrohalogenation agent or a specific halogenated hydrocarbon under the specific condition.

### b. Prior Art

It is known that ring-opened polymers are produced from cycloolefins by the use of a metathesis polymerization catalyst system. Therefore, a process has been proposed to obtain a polymer molded article by carrying out the polymerization and molding of a metathesis polymerizable cycloolefin available at a low cost, such as dicyclopentadiene (DCP) in one step in a mold using a metathesis polymerization catalyst. More particularly, a process has been proposed to obtain a crosslinked polymer molded article, taking advantage of the fact that a metathesis polymerization catalyst system is composed of two components consisting of a catalyst component such as tungsten chloride and an activator component such as an alkylaluminum, by using two kinds of solutions each containing one of the above components and a monomer, quickly mixing the solutions and injecting the mixture into a mold (for example, USP 4,400,340).

Such processes are very attractive from industrial viewpoint because large-sized molded articles having excellent properties can be produced with inexpensive low-pressure mold by the processes, however, it has been found that various improvements on the process are necessary for the practical application.

Impartment of flame-retardance to the polymer is one of the above problems to be solved. As mentioned above, said crosslinked polymer is generally made from a hydrocarbon containing unsaturated bond and, accordingly, it is highly combustible once ignited. Therefore, a polymer having a flame-retardance improved to any extent is frequently required according to the use.

Vapor-phase control of a polymer with a halogen is generally effective in improving the flame-retardance of such non-aromatic hydrocarbon polymer and it is necessary to add a certain amount of a halogen component to the resin component. Examples of the process for achieving the above purpose are the introduction of a halogen into a main polymer by using a halogen atom-containing metathesis polymerizable cycloolefin as at least a part of the monomer components, the addition of a halogen-containing low-molecular compound containing a large amount of halogen and used as a conventional flame-retardant such as decabromodiphenyl ether and the addition of a halogen-containing polymer used as a flame-retardant containing a large amount of halogen such as a poly(bromostyrene). The first process is the most excellent process in principle for obtaining a flame-retardant crosslinked polymer, however, such a halogen-containing monomer is not yet available as a raw material in commercial production. Accordingly, the monomer is necessary to be produced newly on industrial scale and, furthermore, it has to be available at an acceptable price and conform to environmental requirement. The development of the optimum halogen-containing monomer satisfying these conditions will be surely difficult and time-consuming. On the other hand, the process to use a low-molecular or polymeric halogen-containing flame-retardant is easiest to practice because a commercially available flame-retardant meets the purpose. However, such flame-retardants are generally scarcely soluble in cycloolefins used as the monomer and, consequently, the reactive solution for molding becomes non-uniform to cause problems on handling such as the precipitation of the flame-retardant during storage or the lowering of the properties of the molded articles, and a molded article having satisfiable properties is hardly producible by the use of such flame-retardant.

US 3,220,993 discloses a method for preparing a solid halogenated dehydropolycyclopentadiene which comprises contacting a solution of a solid polymer of cyclopentadiene with a halogen and heating said halogenated polycyclopentadiene to dehalogenate said halogenated polycyclopentadiene to a solid polymer.

EP-A-0 367 095 discloses a method of improving the paint adhesion properties of a cycloolefin polymer article comprising exposing the surface of said article to a solution of sodium hypochlorite.

### BRIEF DESCRIPTION OF DRAWINGS

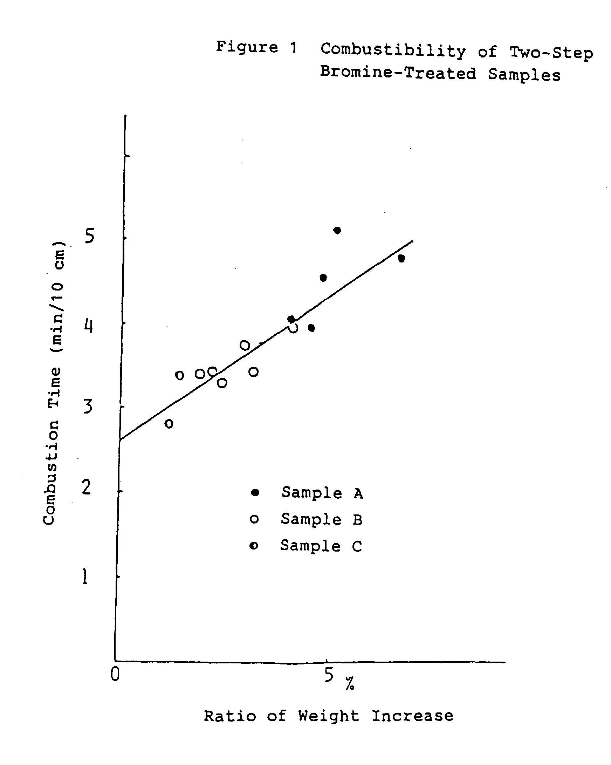

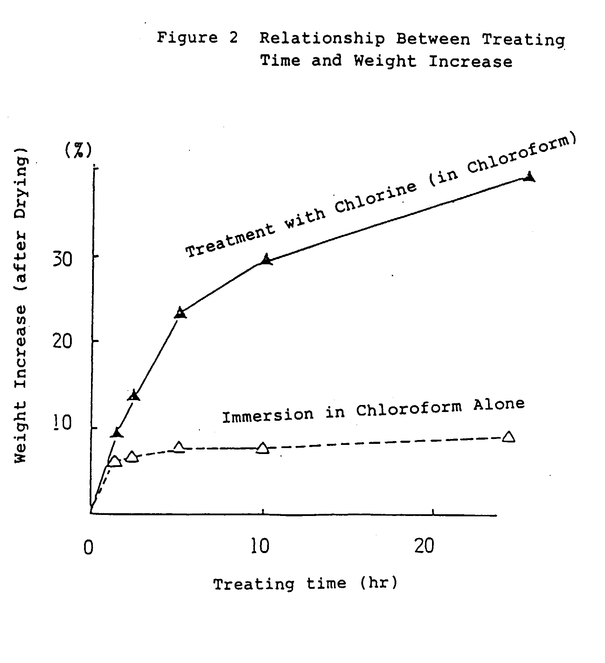

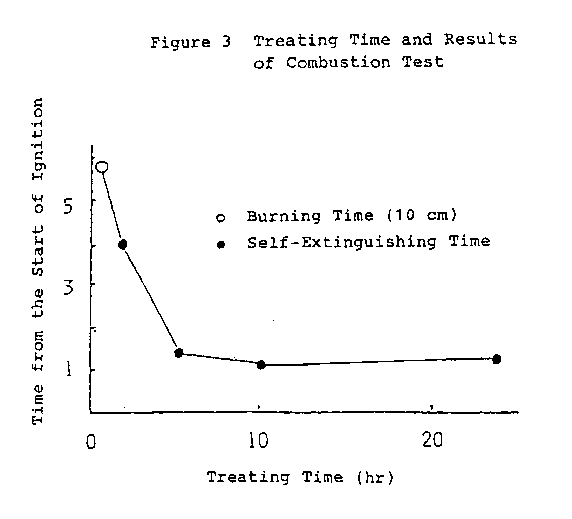

The Figure 1 shows the test results of the Example 7 and the Figure 2 and 3 show those of the Example 8.

### DETAIL DESCRIPTION OF THE INVENTION

The inventors of the present invention have contrived a means for introducing a halogen into a polymer molded article using a method absolutely different from the above conventional methods, paying attention to the fact that the above crosslinked polymer contains at least one carbon-carbon double bond in the recurring unit formed by the metathesis polymerization and that such unsaturated bond is active especially to an electrophilic reagent and easily reacts with halogen atom mainly by addition reaction. As a result of investigation made also on the improvement of the flame-retardance of a metathesis polymer molded article by the post-halogenation or the post-hydrohalogenation of the molded article, the inventors have achieved the present invention.

The inventors have confirmed previously that such effect can be attained by the addition reaction caused by contacting the article with halogen molecule, further such reaction is easily achieved by swelling the article with the organic solvent, and it has been found on the treatment with a hydrogen halide that, although there is essentially no weight increase supposed to be caused by the addition of halogen in the case of hydrogen halide treatment, the flame-retarding effect of the hydrogen halide treatment is generally superior to that of halogen molecule treatment accompanying considerable weight increase. Furthermore, the molded article treated with a hydrogen halide has hard surface with black luster and a surface-decoration effect similar to the black coating or the black mass-coloring can be attained even by the slight surface-treatment ineffective in making flame-retardant. The flame-retardant effect of the hydrogen halide treatment which introduces only one halogen atom into each double bond was naturally thought to be lower than that of the halogen molecule treatment capable of introducing two halogen atoms into each double bond, when considered simply as a process for the introduction of halogen atom. However, as stated above, the treatment with a hydrogen halide has rather excellent effect and the hydrogen halide can be handled more easily than halogen molecule because of its low toxicity relative to the halogen molecule. Further, hydrogen chloride has good effect on flame-retaradation as good as bromine which has better flame-retardation than chlorine. Accordingly, the treatment with a hydrogen halide is an extremely practical method.

The above facts suggest that the expected addition reaction of the hydrogen halide to the double bond in a metathesis polymer is not the exclusive reaction occurring in the hydrogen halide treatment of the present invention. The details of the mechanism of the reaction are not yet clear at present, however, the above effect is supposed to be caused by the repetition of the addition reaction of the hydrogen halide and the simultaneous elimination reaction of hydrogen halide at different site. Further, the halogen molecule to be used in the halogenation treatment is toxic and is difficult to handle and the molded article should be swollen with a solvent to perform the halogenation to attain a sufficient flame-retardance. It has been found that the solvent has to be removed from the molded article after the halogenation and a considerable apparatus is necessary for the removal procedure. However, when certain kinds of halogenated hydrocarbons are used as the solvent, a considerable amount of the compounds cannot be removed from the polymer molded article by any means and the compounds left in the article contributes to the improvement in the flame-retardance. As a result of intensive investigation, these halogenated hydrocarbon solvents are expected to be reacted with the unsaturated bond of the crosslinked polymer by a radical chain transfer reaction. It can be confirmed also by literatures in which a polyisoprene or polybutadiene is made to be flame-retardant by reacting the polymer with carbon tetrachloride or trichlorobromomethane in the presence of a radical initiator consisting of a hydroperoxide or a redox agent, thereby introducing the halogen into the polymer while maintaining the processability of the polyisoprene or polybutadiene (E.G. Cockbrain, T.D. Pendle and D.T. Turner, Chem. Ind. (London), 1960, 318 and H. Rosin, J. Appl. Polymer Sci., 13, 1721 (1969)).

It has been ascertained that the same reaction can take place in a crosslinked polymer molded article which is similar to the polyisoprene and polybutadiene in the point of the carbon-carbon unsaturated bond existing in the main chain.

### The present invention is:

A process for producing a flame-retarded and/or surface modified polymer molded article wherein a crosslinked polymer molded article is produced by the simultaneous polymerization and molding of at least one kind of metathesis polymerizable cycloolefins in the presence of a metathesis polymerization catalyst, and said molded article:
i) is contacted with a halogen molecule,
ii) is contacted with a hydrogen halide,
iii) is contacted with a halogenation agent which is sulfuryl chloride or a hydrohalogenation agent which is selected from ammonium chloride and/or fumaryl chloride,
or iv) is contacted with a halogenated hydrocarbon
   which is at least one compound selected from the group consisting of trichlorobromomethane, carbon tetrachloride, carbon tetrabromide, 1,1,1,2-tetrachloro-1,2-dibromoethane, hexachlorocyclopentadiene, brominated benzyl chloride, dichlorodi(brominated phenyl)methane, hexachloro-p or -m-xylene,and chloroform,
   and said molded article is treated with said halogenated hydrocarbon under the condition to enable the reaction of the halogenated hydrocarbon with the unsaturated bond in the crosslinked polymer by the radical chain transfer reaction.

### <Treatment by a halogen molecule>

Any molded article produced by conventional process for the production of crosslinked polymer molded article produced metathesis polymerization can be completely used as the molded article to be used in the present invention. Furthermore, the halogenation by post-treatment can be carried out simply by contacting the article with a halogen at normal temperature or thereabout. Since the degree of flame-retardance depends upon the amount of the halogen bonded to the polymer, it is necessary to control the halogenation degree according to the required degree of flame-retardance, and the amount of bonded halogen can be controlled by selecting the swelling ratio of the molded article with a solvent used in the contact of the article with the halogen. Generally, the surface part of the article is preferentially halogenated and, accordingly, the present modification process can be applied also to the surface-modification of the article.

Since halogen is introduced into a molecule of a metathesis polymer generally by a reaction consisting of principally an addition reaction by an electrophilic reaction, the surface subjected to the treatment becomes resistant to the attack of an electrophilic reagent. More concretely, the treated article has improved resistance to e.g. general oxidation.

Furthermore, the gas-permeability of the surface of a molded article can be decreased by the halogen treatment of the present invention because a polymer of halogenated hydrocarbon has decreased permeability of gases in general compared with the corresponding hydrocarbon polymer.

As mentioned above, the process of the present invention for the production of a modified polymer molded article enables the development of remarkable flame-retardant and surface-modifying effects with a simple procedure and the considerable improvement in the practical applicability of a crosslinked polymer molded article.

The halogen to be used in the present invention includes the molecules of bromine, chlorine, iodine and fluorine. Bromine and chlorine are especially preferable from the viewpoint of the improvement in flame-retardance. Although these halogen molecules can be brought into contact with a crosslinked polymer molded article in the form of gaseous and/or liquid state as it is, a particular apparatus is required for the handling of the halogen in gaseous or liquid state because of high toxicity and corrosivity of halogen molecules. In contrast with the above, a process to contact a halogen molecule with a polymer molded article in a solvent in the state of solution can be easily carried out with simple procedure. The solvent should dissolve a halogen molecule, in addition, the solvent should swell a molded article. As mentioned above, the affinity of the polymer molded article depends upon the kinds of the solvent and the difference of the affinity can be utilized for the control of halogenation degree.

A solvent having high affinity can swell a molded article to a high swelling ratio and the contact of the crosslinked polymer with the halogen dissolved in the solvent is facilitated according to the increase in the swelling ratio to generally increase the rate of halogenation reaction and degree of halogenation. The solubility of the halogen molecule in the solvent also exerts influences upon the rate of halogenation reaction and halogenation ratio, and the solvent used in the present invention is preferably the one which dissolves the halogen molecule at least to some extent. Furthermore, the solvent is required to be essentially free from reactivity with halogen under the halogenation reaction condition and essentially free from side reactions other than halogenation reaction.

The solvent to be used in the present invention is preferably a halogenated hydrocarbon having 1 to 6 carbon atoms from the above point of view. Among the halogenated hydrocarbons, chlorinated hydrocarbons are especially preferable from the viewpoints of the availability and cost. Examples of such solvents are methylene chloride, chloroform, carbon tetrachloride, 1,1-dichloroethane, 1,2-dichloroethane, 1,1,2-trichloroethane, 1,1,1,2-tetrachloroethane, trichloroethylene, perchloroethylene, butyl chloride, chlorobenzene, 1 1,2-dichlorobenzene, α,α,α-trichlorotoluene and hexachloroxylene. These halogenated hydrocarbons are largely different in the dipole moment according to the position of the halogen atoms and, accordingly, various solvents are available to meet the requirement for a wide variety of affinity or swelling ratio to a crosslinked polymer and a solvent having a proper swelling ratio can be selected according to the required halogenation ratio. Caution is necessary for the use of a solvent having carbon-carbon double bond because, under certain condition, such solvent may cause the addition of halogen to the double bond or further the substitution of hydrogen atom with the halogen atom under light irradiation condition, etc., also in such halogenated hydrocarbons.

Examples of the solvents other than the above halogenated hydrocarbons are aromatic hydrocarbons such as benzene, ethers such as tetrahydrofuran and diphenyl ether, esters such as ethyl acetate, and the like. Also in such solvents, attention should be paid because the methyl group of toluene or xylene and the methyl of the acetyl group of ethyl acetate, etc., is activated with the adjacent double bond, the solvent itself is halogenated by the reaction with the halogen and hydrogen halide is generated to consume the halogen.
Furthermore, care is necessary in the possibility of the breakage of ether or ester bonds.

These solvents participate in the reaction generally in the case of a compound having active hydrogen, for example water, alcohol, amines, aliphatic ketone such as acetone, carboxylic acid and the like except for a particular exception and the halogenation takes place in the form to halogenate an end of a double bond and bond an active hydrogen residue to the other end in place of the addition of halogen to the double bond. For example in the case of water, a hypohalogenous acid is produced and the double bond is halohydrinated under neutral or alkaline condition. Similarly, halo-etherification and halo-esterification take place in the case of alcohol and carboxylic acid, respectively. These reactions are considered as oxidation reactions rather than simple halogen addition reactions and the solvents are necessary to be used taking care of the reaction condition. For example, it is known that, when the solvent is water and the halogen molecule is bromine, the bromine scarcely exists in the form of hypobromous acid even in water by the shift of equilibrium and is present as bromine molecule in an acidic state of pH 1 or less and, accordingly, bromohydrination reaction does not take place.
As mentioned above, the halogenation is carried out by using a halogen molecule, however, a halogenation agent which is sulfuryl chloride may be used for the halogenation reaction. The solvent which is described before is applicable in this case.

Hydrogen halide is frequently formed as a by-product in the halogenation process, as stated above, and the hydrogen halide has the same reactivity as mentioned before. Accordingly, the by-produced hydrogen halide may be utilized singly or as a mixture with halogen molecule according to the need.

The halogen-treated molded article may contain a residual free halogen molecule or a hydrogen halide. Such a residual halogen may cause adverse effect in the use of the article and, accordingly, it is preferably removed by thoroughly washing the molded article. As an alternative method, the residual halogen can be removed by chemical reaction using a reactive reagent such as ammonia.

Although the solvent used in the present invention as a reaction medium should be removed from the treated polymer molded article, it is usually difficult to remove a solvent having high affinity to the polymer. A flame-retardant medium having low volatility and higher molecular weight and usable also as a flame-retardant may be used as the treating reaction medium which is left in the article without removing after the treatment. Examples of such medium are chlorinated paraffin, brominated paraffin, tricresyl phosphate, tris(halogenated phenyl) phosphate and tris(halogenated alkyl) phosphate.

One of the characteristic features of the post-halogenation process of the present invention is the halogenation in nonuniform state to enable the proper control of the halogenation degree in the direction of the thickness of the molded article. As mentioned before, the halogenation is restricted to the part closest to the surface by the use of a medium free from affinity to the polymer. When the whole part of the article is to be halogenated as uniformly as possible, a solvent having a proper swelling ratio to the molded article is selected and the article is sufficiently swollen with the solvent before the addition of halogen. On the other hand, when a surface layer is to be highly halogenated at a certain thickness, halogen is added at a high concentration to a solvent capable of exhibiting high swelling ratio, the halogenation is proceeded simultaneous to the start of swelling and the reaction is terminated when the swelling proceeds to a proper thickness. In addition to the above, various reaction process can be contrived by specialists according to need.

The addition of a halogen which is liquid at normal temperature, for example bromine, can be carried out either by dripping in the form of liquid or introducing the evaporated gaseous halogen in the same manner as the introduction of chlorine which is gaseous at normal temperature. The concentration of halogen in the reaction system can be controlled below the solubility limit of the halogen in said medium. The reaction is carried out generally at normal temperature or thereabout or under slight cooling. Although the swelling ratio of the polymer molded article with the medium can be increased to increase the halogenation degree, the side reaction other than the addition reaction to the double bond is liable to take place to cause the lowering of the halogenation degree and, accordingly, it is necessary to select the optimum conditions by experiment.

The reaction time depends upon the other reaction conditions and is generally about 1 to 50 hours.

The residual medium should be evaporated from the molded article after the completion of the halogenation treatment, by taking the article out of the medium and drying the article.

The halogen adsorbed to the molded article in unreacted state can be removed by the treatment with ammonia or the like.

The degree of halogenation can be estimated by the increase in weight, elemental analysis and infrared absorption spectrum. Although the estimation by weight increase is an indirect method, it can be extremely easily performed. In the case of calculating the halogenation ratio from elemental analysis or infrared absorption spectrum, it is necessary to contrive a means to get an average halogenation ratio along the direction of thickness because, as mentioned above, the modification method of the present invention is based on a heterogeneous reaction. The infrared absorption has an advantage to enable the detection even if the side reactions other than the halogen-addition reaction are serious.

### <Treatment by a hydrogen halide>

Any molded article produced by conventional process for the production of crosslinked polymer molded article produced by metathesis polymerization can be completely used as the molded article to be treated in the present invention.

Since the hydrogen halide treatment can be carried out under a temperature condition slightly heated from normal temperature, the operation of the process is extremely easy.

Any hydrogen halide including hydrogen chloride, hydrogen bromide, hydrogen fluoride, hydrogen iodide and the like can be used in the present process, among which hydrogen chloride is most preferable taking consideration of the cost and handleability in addition to the above-mentioned finding that the added halogen atom is not the sole factor to develop the flame-retarding effect.

Instead of hydrogen halide, ammonium chloride and/or fumaryl chloride can also be used as a hydrohalogenation agent.

Although hydrogen halide can be brought into contact with a crosslinked polymer molded article in the form of gaseous and/or pressurized liquid state as it is, a particular apparatus is required for the the handling of the hydrogen halide in gaseous or pressurized liquid state because of its high corrosivity and acidity. In contrast with the above, a process to contact a hydrogen halide with a polymer molded article in the state of solution in a solvent is a preferable process which can be easily carried out with simple procedure. The solvent should dissolve hydrogen halide and swell the crosslinked polymer.

The use of a solvent is effective in controlling the thickness of the treated layer. For realizing the flame-retarding treatment by the hydrogen halide treatment, a layer of a considerable thickness in the molded article should be subjected to the treatment and it is necessary to swell the layer with a solvent to facilitate the permeation of the hydrogen halide to the thickness at a sufficient concentration. In other word, the thickness of the treated layer can be controlled by the swelling power of the solvent to the polymer. As a matter of course, the solvent should be those unreactive with the hydrogen halide and free from suppressing effect on the activity of the hydrogen halide.

The solvents can be classified into three main groups according to the purpose of the treatment.

In the case of using the hydrogen halide treatment for the purpose of flame-retarding as mentioned above, it is necessary that the solvent has considerable swelling power to the metathesis polymer molded article. Examples of such solvents include halogenated hydrocarbons having one to six carbon atoms, especially one to three carbon atoms, aromatic hydrocarbons having six to nine carbon atoms, their halides, etc.

Concrete examples of the former compounds are preferably chlorinated hydrocarbons such as methylene chloride, chloroform, carbon tetrachloride, 1,1-dichloroethane, 1,2-dichloroethane, 1,1,2-trichloroethane, 1,1,1,2-tetrachloroethane, trichloroethylene, perchloroethylene and the like, and examples of the latter compounds are toluene, xylene, ethylbenzene and chlorobenzene. These solvents are volatile and various problems may occur in the use of the treated article when the solvents are not removed, in principle, from the polymer molded article after the treatment. Practically, the removal of the treatment solvent from the treated article spends considerable time and causes the increase in cost. In some cases, it may be advantageous in practice to select a solvent having rather low volatility and higher molecular weight and acting as a plasticizer even if left in the treated layer of the polymer molded article. Furthermore, the selection of a low-volatile solvent having the action of flame-retardant by itself is more advantageous in order to prevent the lowering of the flame-retardance by the treatment.

Examples of such solvents are halogenated paraffins such as chlorinated paraffin and brominated paraffin , phosphoric acid esters such as tricresyl phosphate, phosphoric acid ester of a halogen-containing hydroxide such as tris(bromophenyl) phosphate and tris(chloroethyl) phosphate.

The solvents to be used in the flame-retarding treatment not necessarily have sufficiently high solubility of hydrogen halide and, accordingly, the treatment is preferably carried out under continuous introduction of hydrogen halides into the treatment system according to the need.

On the other hand, in the case of performing such hydrogen halide treatment for the purpose of surface-treatment such as black decoration of the surface, the purpose can be achieved by the treatment of only an extremely thin surface layer of the molded article. The solvent suitable for the above purpose is not necessary to have high swelling power to the molded article and, rather, it is preferably the one having high affinity to the hydrogen halide and capable of stably dissolving the halide at high concentration. The concrete example of such solvent to be cited first is water, however, other protonic polar solvents such as ethanol and isopropanol or aprotic polar solvents such as N-methylpyrrolidone and dimethylformamide can be used as the solvent.

The treatment of the present invention is carried out preferably by contacting a polymer molded article with a hydrogen halide in the presence of the above-mentioned solvent at a temperature between normal temperature and generally 100°C. The rate of treatment increases generally with increasing temperature. However, the high-temperature treatment causes various problems such as lowering of the solubility of hydrogen halide in the solvent, the deformation of the molded article and the difficulty in handling a corrosive hydrogen halide at high temperature. Accordingly, a proper temperature can be selected according to the factors such as purpose, apparatus, cost and the like. The treating time can be also properly selected according to the required effect and is generally between 0.05 and 24 hours.

The treated article is dried, as mentioned above, to remove the residual treating solvent. Prior to the drying treatment, the article may be rinsed with or immersed in an alkaline solution to remove residual free hydrogen halide.

### <Treatment by a halogenated hydrocarbon>

The halogenated hydrocarbon (III) having the action of strong radical chain transfer agent used in the present invention is a compound having generally plural halogen atoms bonded to a carbon atom taking SP³ orbit wherein at least one of the halogen atoms cannot be eliminated as a hydrogen halide together with the hydrogen atom substituting a carbon atom adjacent to the carbon atom bonded with said halogen atom. In the above compound, the action of a chain transfer agent is further increased when the carbon atom adjacent to the carbon atom bonded with the halogen atom forms a part of an aromatic group, a carbonyl group or an unsaturated bond and when a carbon radical left after the chain transfer of said halogen atom as a radical has an easily stabilizable form.

The halogen atom is preferably chlorine or bromine, among which bromine is more preferable because of high chain transfer action and flame-retarding action compared with corresponding chlorine.

Such halogenated hydrocarbon (III) is brought into contact with the crosslinked polymer molded article preferably in liquid state and, accordingly, it is preferably liquid at normal temperature. However, the hydrocarbon is not necessarily restricted in liquid substance because even a solid substance may be used as a binary component system in the form of a solution.
The halogenated hydrocarbon (III) is at least one compound selected from the group consisting of trichlorobromomethane, carbon tetrachloride, carbon tetrabromide, 1,1,1,2-tetrachloro-1,2-dibromoethane, hexachlorocyclopentadiene, brominated benzyl chloride, dichloro-di(brominated phenyl)methane, hexachloro-p- or -m-xylene and chloroform. Trichlorobromomethane is especially preferable.

The crosslinked molded article is brought into contact with a halogenated hydrocarbon (III) and treated under the condition to enable the reaction of said halogenated hydrocarbon (III) with the unsaturated bond in the crosslinked polymer by the radical chain transfer.

The radical chain transfer can be brought about by using a radical initiator in combination with the above halogenated hydrocarbon (III), contacting the above molded article with both materials to include the materials in the molded article and decomposing the radical initiator by heat or irradiation of light. Any conventional radical initiators can be generally used as the radical initiator for the present process. For example, the radical initiator is a peroxide such as tertiary butyl hydroperoxide, a peracid derivative such as benzoyl peroxide or a combination of the above with a tertiary amine or a metal ion having low atomic valence such as ferrous ion to form a redox system and accelerate the decomposition of the radical initiator. A radical initiator which can form a radical by its action, e.g. benzoin, may be used in the present process. The amount of the radical initiator is generally 0.5-20 mol%, especially 1-10 mol% based on the above halogenated hydrocarbon (III).

Unexpectedly, it has been found that the radical chain transfer can be easily induced in the present invention without using the above radical initiator.

As mentioned before, it is known that the polymer of the present invention contains at least one unsaturated bond in each recurring unit and the surface is easily oxidized in air. One of the mechanism of such oxidation is the formation of a peroxide from air and an unsaturated carbon-carbon bond and the decomposition of the peroxide to induce a radical reaction. Accordingly, when a halogenated hydrocarbon having strong radical chain transfer action is present in the system, the hydrocarbon is subjected to radical chain transfer to cause the introduction of the halogenated hydrocarbon residue into the crosslinked polymer chain in a state added to the double bond.

Furthermore, such crosslinked polymer molded article contains, as mentioned above, a transition metal ion as a catalyst residue and the ion is supposed to be partially reduced to a state of lower atomic valence by the reaction with an organometallic compound used as an activator to effect the redox reaction with the above halogenated hydrocarbon (III) and initiate the radical chain transfer reaction. The above autocatalytic radical chain reaction is accelerated by the presence of light.

Probably by the above-mentioned mechanism, the above halogenated hydrocarbon (III) can be fixed in the crosslinked polymer molded article and the article can be converted into a crosslinked polymer molded article having improved flame-retardance, by absorbing the halogenated hydrocarbon (III) in the crosslinked polymer molded article and heating in air preferably at 50-90°C for 0.5-100 hours.

The extent of the flame-retardance of the modified molded article can be easily controlled by adjusting the period and temperature of the contact of said halogenated hydrocarbon (III) with the crosslinked polymer molded article, thereby controlling the amount of the component (III) absorbed in the polymer molded article. Generally, the temperature is between room temperature and 80°C and the period is about 0.1-10 hours. As stated above, the radical initiator can be most easily used by dissolving in the above halogenated hydrocarbon (III) and absorbing together with the component (III) into the polymer molded article.

The component (III) absorbed in the polymer molded article by the above contacting process can be bonded to the article by the heat-treatment. In some cases, the heat-treatment has to be carried out in air or under light-irradiation. In the case of using a radical initiator, it is generally preferable to use an initiator decomposing with heat, although dependent upon the decomposition temperature of said radical initiator. The bonding can be carried out, as mentioned above, by heating generally at 50-90°C for 0.5-100 hours irrespective of the presence or absence of the radical initiator.

The reduction of weight generally takes place by the evaporation of a part of unreacted component (III) by heating. The treatment is considered to be completed and the heating is stopped when the weight decrease ceases and the weight becomes constant. If the reaction is to be terminated before the weight becomes constant, the article may be extracted with another solvent to remove the residual unreacted component (III), however, the removal of the solvent is a troublesome problem. Accordingly, it is preferable to complete the reaction by quickly making the weight constant by a proper control of the temperature, etc.

The ratio of the bonded component (III) can be estimated by the weight increase of the article having settled weight and, as stated above, the degree of flame-retardance can be controlled by the extent of the weight increase.

A polymer molded article produced by using at least one kind of a metathesis polymerizable cycloolefin as at least a part of the monomer component and carrying out the simultaneous polymerization and molding of the monomer in the presence of a metathesis polymerization catalyst can be used as the polymer molded article used for the treatment in the present invention, because the article contains at least one carbon-carbon double bond in the component of the constituent polymer and the halogen can be added to the double bond by the modification treatment of the present invention.

Especially preferable article is a crosslinked polymer molded article produced by using a main monomer component consisting of metathesis polymerizable cycloolefins containing a cycloolefin having two or more metathesis polymerizable cycloolefin groups as at least a part of the main monomer component, separating the metathesis polymerization catalyst into the main catalyst component and the activator component, preparing two reactive solutions A and B each containing one of the above components together with the monomers, quickly mixing the solutions for example by impinge mixing and pouring the mixture into a mold to effect the simultaneous polymerization and molding.

The metathesis polymerizable cycloolefin group is preferably those having large strain because of its high polymerizability. Especially, a group having a norbornene structure is preferable from the viewpoint of the easiness of production and high polymerizability.

Preferable concrete examples of the cycloolefins capable of forming a crosslinked polymer are dicyclopentadiene, tricyclopentadiene, cyclopentadiene oligomer, 1,4,5,8-dimethano-1,4,4a,5,8,8a-hexahydronaphthalene, 1,4,5,8,9,10-trimethano-1,4,4a,5,8,8a,9,9a,10,10a-decahydroanthracene, 1,2-addition compound of 1,5-cyclooctadiene and cyclopentadiene, ethylenebisnorbornene and phenylenebisnorbornene.

The cycloolefins acting as bifunctional compounds in the metathesis polymerization include norbornene, 5-methylnorbornene, 5-ethylidenenorbornene, 5-phenylnorbornene, vinylnorbornene, dihydrodicyclopentadiene, cyclopentadiene-methylcyclopentadienecodimer, 1,4,5,8-dimethano-1,4,4a,5,6,7,8,8a-octahydronaphthalene, 6-methyl-1,4,5,8-dimethano-1,4,4a,5,6,7,8,8a-octahydronaphthalene and 6-ethylidene-1,4,5,8-dimethano-1,4,4a,5,7,8,8a-heptahydronaphthalene.

In the present invention, other cycloolefins containing hetero atom, in other word, cycloolefins having polar group may be used as a part of the monomer in addition to the cycloolefins composed solely of hydrocarbons. The polar group is preferably ester group, ether group, cyano group, N-substituted imido group, and halogen. Examples of the copolymerizing monomer include 5-methoxycarbonylnorbornene, 5-(2-ethylhexyloxy)carbonyl-5-methylnorbornene, 5-phenyloxymethylnorbornene, 5-cyano norbornene, 6-cyano-1,4,5,8-dimethano-1,4,4a,5,6,7,8,8a-octahydronaphthalene, N-butylnadic acid imide and 5,6-dichloronorbornene.

It is required that the metathesis polymerizable polycyclic cycloolefins are those containing the lowest possible amount of impurities which inactivate the metathesis polymerization catalyst.

The preferable monomer composition for the polymer molded article of the present invention is a combination of 100 to 50 mol% of dicyclopentadiene and the remaining part of metathesis polymerizable cycloolefins having norbornene structure unit mentioned above.

As the catalyst component of the metathesis polymerization catalyst system used in the production of the polymer molded article of the present invention are used salts such as halides of tungsten, rhenium, tantalum, molybdenum and the like, especially tungsten compounds. Among tungsten compounds are preferred tungsten halides and tungsten oxyhalides. More particularly, tungsten hexachloride and tungsten oxychloride are preferred. However, such tungsten salt compounds undesirably initiate cationic polymerization immediately when added directly to the monomer. It is, therefore, preferable that the tungsten salt compounds are previously suspended in an inert solvent such as benzene, toluene or chlorobenzene and solubilized by the addition of a small amount of an alcoholic compound or a phenolic compound. Organo ammonium tungstate or molybdate can be used.

A Lewis base or a chelating agent is preferably added to the catalyst in an amount of about 1-5 mol per 1 mol of the tungsten compound in order to prevent undesirable polymerization. Those additives may include acetylacetone, acetoacetic acid alkyl esters, tetrahydrofuran and benzonitrile.

Under such situations, the monomer solution (Solution A) containing the catalyst component has sufficiently high stability for practical use.

The activator components of the metathesis polymerization catalyst system include organometallic compounds chiefly comprising alkylated compounds of metals of group I - group III in the periodic table, preferably, tetraalkyltins, alkylaluminum compounds and alkylaluminum halide compounds such as diethylaluminum chloride, ethylaluminum dichloride, trioctylaluminum, dioctylaluminum iodide and tributyltin hydride. The organometallic compound used as the activator component is dissolved in the monomer mixture to form the other reactive solution (corresponding to the Solution B) containing the activator.

According to the present invention, in principle, the polymer molded articles are produced by mixing the Solution A with the Solution B. The polymerization reaction, however, starts very rapidly when the above-mentioned composition is used and, consequently, undesirable initiation of hardening often occurs before the mold is completely filled with the mixed solution. In order to overcome the problem, it is preferable to use a polymerization moderating agent as mentioned above.

As such moderators are generally used Lewis bases, particularly, ethers, esters, nitriles and the like. Examples of the moderators include ethyl benzoate, butyl ether and diglyme. Such moderators are generally added to the solution containing the activator component comprising organometallic compound. When a monomer having a polar group and acting as a Lewis base is used in the reactive solution, the monomer may be used to play the role of the moderator.

When a tungsten compound is used as the catalyst component, the ratio of the tungsten compound in the metathesis polymerization catalyst system to the above-mentioned monomers is 1000:1 - 15000:1, and preferably 2000:1 on molar base. When an alkylaluminum compound is used as the activator component, the ratio of the aluminum compound to the above-mentioned monomers is 100:1 - 5000:1 and preferably around a ratio of 200:1 - 2000:1 on molar base. The amount of the masking agent or the moderator may be adjusted by experiments depending upon the amount of the catalyst system.

In order to decrease the residual monomer content, a small amount of an active halogen compound such as trichloromethyltoluene, ethyl trichloroacetate and isophthaloyl chloride or an acid anhydride such as benzoic anhydride may be added in the production of the polymer molded article of the present invention.

A variety of additives may be used practically in the crosslinked polymer molded article of the present invention to improve or to maintain characteristics of the polymer. The additives include fillers, pigments, antioxidants, light stabilizers, flame retardants, macromolecular modifiers and the like. These additives have to be added to the starting solutions, since they cannot be added after the solutions are polymerized to the crosslinked polymer molded article.

They may be added most easily to either one or both of the Solution A and the Solution B. The additives should be ones being substantially unreactive with the highly reactive catalyst component, activator component and acid anhydrides in the solutions to avoid practical troubles and having no inhibitory action to polymerization. If a reaction between the additive and the catalyst component or the activator component is unavoidable but does not essentially inhibit the polymerization, the additives can be mixed with the monomers to prepare a third solution, and the third solution is mixed with the first and/or second solutions immediately before polymerization. When the additive is a solid filler forming gaps which can be filled sufficiently with both solutions immediately before or during the polymerization reaction, the mold may be filled with the filler prior to pouring the reactive solutions into the mold.

The reinforcing materials or fillers used as additives can improve flexural modulus of the polymer. They include glass fibers, mica, carbon black, wollastonite and the like. The fillers whose surfaces are treated with a silane coupling agent may also preferably be used.

The crosslinked polymer used in the present invention may preferably contain an antioxidant. Preferably, a phenolic- or amine-antioxidant is added to the solution in advance. Examples of the antioxidants include 2,6-t-butyl-p-cresol, N,N′-diphenyl-p-phenylenediamine, tetrakis[methylene(3,5-di-t-butyl-4-hydroxycinnamate)]methane and the like.

The crosslinked polymer of the present invention may also contain other polymers, which are added to the monomer solution. Among polymers, elastomers are more preferable, since the addition of elastomer is effective in improving the impact strength of the molded articles and controlling the viscosity of the solution. Examples of the elastomers to be used in the above purpose include a wide variety of elastomers such as styrene-butadienestyrene triblock rubber, styrene-isoprene-styrene triblock rubber, polybutadiene, polyisoprene, butyl rubber, ethylene-propylene-diene terpolymer and nitrile rubber.

As described above, the polymer molded articles to be used in the present invention are prepared by simultaneous molding and polymerization.

The molding method of the article include, as mentioned above, a resin injection process comprising the mixing of a catalyst and a monomer with a static mixer or the like in advance and the injection of the produced premix into a mold and an RIM process comprising the impinge mixing of the Solution A and the Solution B containing divided catalyst system in a head and the immediate injection of the mixture into the mold. Especially, the RIM process is used in general.

In both of RIM process and resin injection process, the mixture can be introduced into the mold under relatively low pressure, so that an inexpensive mold is usable. The temperature in the mold increases rapidly by the heat of reaction upon the start of the polymerization reaction in the mold, so that the polymerization reaction is completed in a short time. The molded article of the invention can be removed easily from the mold without using a particular releasing agent in contrast with the polyurethane-RIM process.

The halogenation of the molded article is carried out by contacting the obtained polymer molded article with a halogen.

The selection of the kinds of halogen molecule or halogenation agent and the solvent suitable as the reaction medium was already mentioned before.

### ADVANTAGEOUS EFFECT OF PRESENT INVENTION

A crosslinked polymer molded article can be modified to reduce the combustibility and increase the flame-retardance by the process of the present invention. Furthermore, the chemical stability or the resistance to the electrophilic chemical attack to the double bond of the molded article can be improved by the selective halogenation of the surface of the article. In some cases, the characteristic odor of the molded article supposed to be caused by residual monomers can be decreased as a subsidiary effect. Furthermore the molded article treated with a hydrogen halide has hard surface with black luster and surface decoration effect similar to black coating or the black mass-coloring can be attained.

The modification of the present invention can be extremely easily carried out because it is absolutely independent of the molding process of the polymer and the processes before the molding.

The modified product produced by the present invention can be subjected to various post-treatment processes such as coating, adhesion and the like similar to the conventional metathesis polymer molded article.

The molded article treated by the above processes can be used in a variety of uses, particularly the uses required to have a certain extent of flame-retardance according to the need, for example, parts of various transportation vehicles on ground, water or snow including automobile, motorbike, golf cart, snow mobile, boat, hydroscooter, sand buggy, tractor and the like, various facilities, housing of electric and electronic apparatus, etc.

### EXAMPLES

The invention described herein is illustrated in detail by the following Examples and Comparative Example. These examples are solely for explanation and do not limit the scope of the invention.

### Examples 1-6 and Comparative Example 1

### <Preparation of molded plate for halogenation treatment>

### [Preparation of catalyst component solution]

20 Parts by weight of tungsten hexachloride was added to 70 parts by volume of anhydrous toluene under nitrogen stream. A solution containing of 0.925 parts by weight of t-butanol and 5 parts by volume of toluene was added to the obtained mixture. A solution consisting of 11 parts by weight of nonylphenol and 5 parts by volume of toluene to obtain a catalyst solution containing 0.5 M of tungsten. The solution was purged with nitrogen for a night to remove the hydrogen chloride gas formed by the reaction of tungsten hexachloride and nonylphenol. A catalyst solution for polymerization was prepared by adding 1 part by volume of acetylacetone to 10 parts by volume of the solution produced by the above procedure.

A monomer mixture consisting of 95 parts by weight of purified dicyclopentadiene and 5 parts by weight of purified ethylidenenorbornene was added with 3 parts by weight of an ethylene-propylene-ethylidenenorbornene copolymer rubber having an ethylene content of 70 mol% and with 2 parts by weight of Ethanox® 702 as an oxidation stabilizer and the obtained solution was added with the above catalyst solution for polymerization in an amount to give a tungsten content of 0.001 M and obtain a catalyst component solution (Solution A).

### [Preparation of activator component solution]

A mixed solution of activator for polymerization was prepared by mixing trioctylaluminum, dioctylaluminum iodide and diglyme at molar ratios of 85:15:100. The mixed solution was added to a mixture consisting of 95 parts by weight of purified dicyclopentadiene, 5 parts by weight of purified ethylidenenorbornene and 3 parts by weight of the above-mentioned ethylene-propylene-ethylidenenorbornene copolymer rubber in an amount to give an aluminum content of 0.003 M to obtain an activator component solution (Solution B).

A molded plate of a crosslinked polymer having a thickness of 3 mm was produced from the solution A and the solution B prepared above using a reaction injection molding machine. The liquid temperature and the mold temperature in the injection were 30°C and 80°C, respectively.

### <Bromination treatment>

The molded plate prepared above was cut to form sample plates having a dimension of 12.5 cm x 1.25 cm. The sample plates were immersed in various kinds of solvents shown in the Table 1 containing dissolved bromine at normal temperature for a prescribed period. The treated plates were dried at 40°C in vacuum for 2 days and the ratios of weight increase were measured. The results are given in the Table 1. The table also contains the swelling ratio of the molded plate with various solvents and it can be seen from the table that the bromination in a solvent having high swelling ability generally gives higher ratio of weight increase. The weight increase is supposed to be caused by bromination in principle, however, a part of the weight increase may be based on the residual solvent.

The rectangular piece of the treated sample was

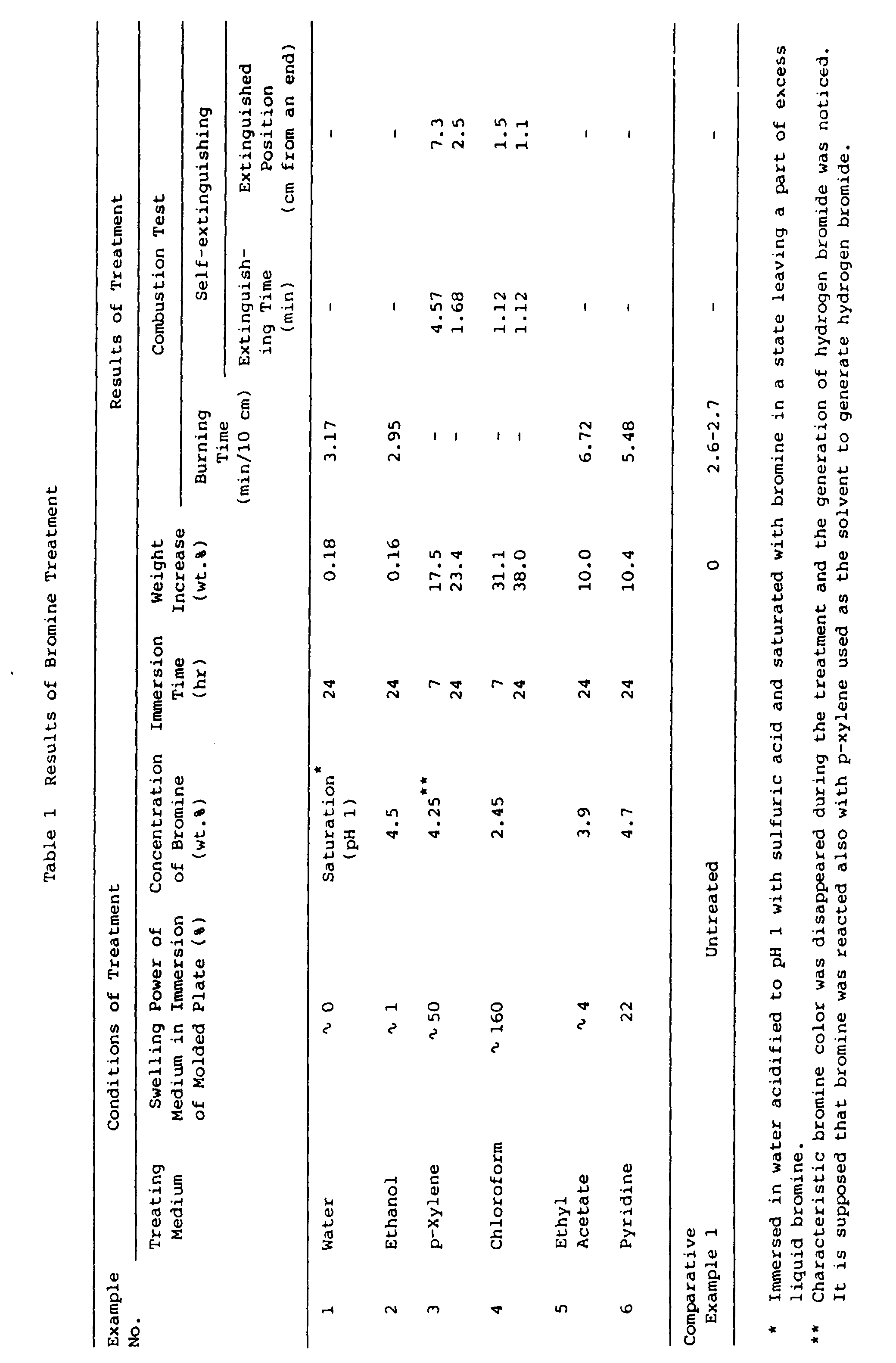

clamped at an end with a clamp and held in horizontal state. The other end of the sample was ignited with a gas burner for 30 seconds and the period to burn 10 cm of the sample after the start of ignition or, if the flame was extinguished in the middle, the period from the ignition to the extinguishment and the length burnt before extinguishment were also described in the table. The similar combustion test was carried out on an untreated molded plate for comparison and the period to burn 10 cm of the plate was measured as comparative Example 1. As is obvious from these results, the burning period is prolonged to a sufficiently detectable extent even at a weight increase of about 0.2% and is nearly doubled at a weight increase of about 10%. When the weight increase is 15% or more, the sample becomes self-extinguishing. As mentioned before, it is supposed that a considerable amount of the solvent used in the swelling treatment is left in the sample in the case of a solvent having high swelling power and, accordingly, the above improvement in the flame-retardance was attained at a bromine content smaller than the above ratio of weight increase. The surface of the treated plate was discolored from pale brown to black according to the increase in the weight without losing the flexibility of the plate. Some plates exhibited slight warpage at high ratio of weight increase.

### Example 7

A solvent having high swelling power had high flame-retarding effect, however, slight deformation of plate occurred in some samples as can be seen in the above Example 4, etc. Accordingly, the bromination under controlled swelling was attempted by separating the swelling with a solvent from the contact with bromine.

Samples of the molded plates same as those of the Example 1 were immersed in dichloroethane at normal temperature for 24 hours (samples A), for 5 hours (samples B) or untreated (samples C). Each sample was placed in bromine gas stream to effect the bromination, taken out of the stream after a predetermined period, dried in vacuum at 60°C for 2 days and weighed to determine the weight increase. All of these samples had small strain and good surface properties. The samples were subjected to the combustion test similar to the above examples and the relationship between the burning time of 10 cm sample and the weight increase was plotted on each of the samples A, B and C to obtain the Figure 1. The burning time is prolonged according to the increase in the weight increase and is doubled at a weight increase of about 5%.

### Example 8

Samples were treated for various period up to 24 hours by the method similar to the Example 4 provided that the treatment of the sample plate was carried out by blowing chlorine gas into chloroform. The treated samples were dried in vacuum at 60°C for 2 days. The dried samples were subjected to the combustion test similar to that of the former examples after the determination of the weight increase.

In order to determine the content of residual chloroform, samples were immersed in chloroform free from chlorine for the same periods, dried by the same method as above and weighed to obtain the weight increase of the sample. These results are shown in the Figures 2 and 3. As is obvious from the figures, the residual chloroform content is nearly constant at about 6 to 8%. When the essential weight increase by chlorine exceeds 10% (the total weight increase is 15%), the sample becomes self-extinguishing. For samples having weight increase of 15% or more, the flame spontaneously extinguishes within little over 1 minute. The self-extinguishing time is maintained almost at the level even by further increasing the weight increase with chlorine. It is evident that the polymer molded article can be made flame-retardant by the chlorine post-treatment.

### Example 9-11, Comparative Example 2-5

### <Preparation of molded plate for hydrohalogenation treatment>

The molded plate was prepared at it is described in example 1-8.

### <Hydrochlorination treatment>

The molded plate prepared above was cut to form sample plates having a dimension of 12.5 cm x 1.25 cm. The sample plates were immersed in various kinds of solvents shown in the Table 2 for respective prescribed periods at normal temperature while blowing dried hydrogen chloride into the solvent. The treated plates were dried at 60-70°C for 3 days in vacuum and the ratios of weight increase were measured. The treated sample was clamped at an end with a clamp and held in horizontal state. The other end of the sample was ignited with a gas burner for 30 seconds and the period to burn 10 cm of the sample after the start of ignition or, if the sample was self-extinguished in the middle, the period from the ignition to the self-extinguishment were also measured. The surfaces of all the samples were discolored in black color and the the samples were hardened while keeping the flexibility.

For comparison, the samples were immersed for the same periods in pure solvent without adding hydrogen chloride and the tests of weight increase and

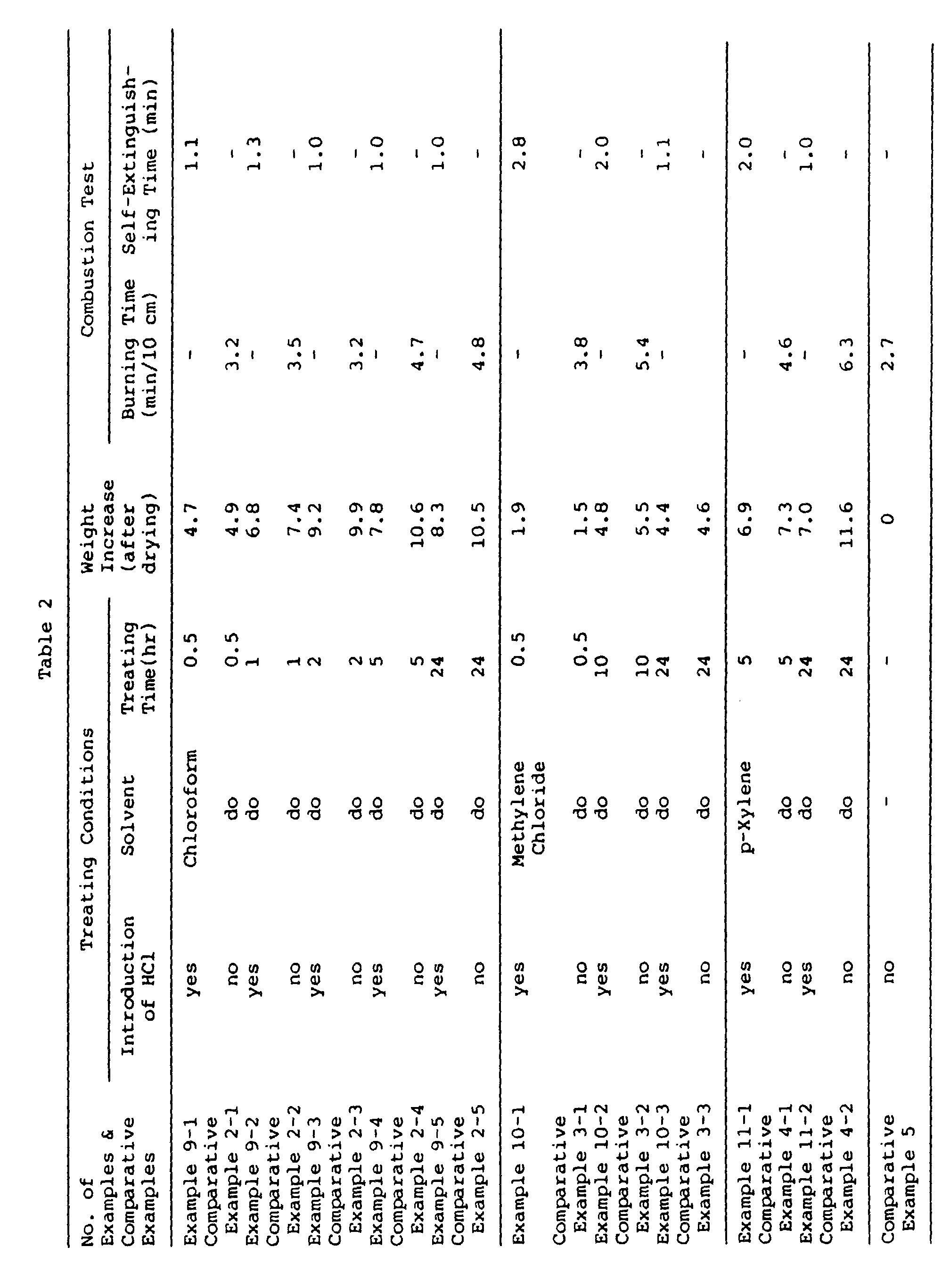

combustibility were carried out after drying. The surfaces of the samples had yellowish brown color which was the color of the original samples and there was no surface-blackening.

The samples treated in chloroform or methylene chloride under introduction of hydrogen chloride were self-extinguishing even by the treatment for a short time, for example for 30 minutes, while the combustibilities of the samples immersed in a medium free from hydrogen chloride, including the samples immersed for 24 hours, were comparable to those of untreated samples and the effect of the treatment was obvious.

More interestingly, the ratios of the weight increase of the treated samples were, without exception, smaller than those of the comparative examples subjected to the same treatment provided that the introduction of hydrogen chloride was omitted. The fact shows that there is almost no weight increase caused by the addition of hydrogen chloride. The development of good self-extinguishing property in spite of the above fact gives a definite suggestion that the mechanism of the self-extinguishing effect is different from the introduction of the halogen atom.

In any case, the treatment effect is extremely remarkable. The heat-distortion temperature and notched Izod impact strength were measured on the sample of the Example 9-1 and the results were equal to those of untreated sample (Comparative Example 5). Accordingly, a molded article can be made self-extinguishing without causing the change in the original properties of the article by the proper selection of the treating conditions.

### Example 12

Samples same as those used in the Example 9 were immersed in concentrated hydrochloric acid at normal temperature, 40°C, 60°C and 80°C, respectively. The surface of the sample turned into glossy black by the treatment at normal temperature for 24 hours, at 40°C for 4 hours, at 60°C for 2 hours or at 80°C for 1 hour. The heat-distortion temperature and impact strength, etc., of the sample having black-discolored surface were measured and the results were equal to those of the untreated sample.

The burning times of the samples were prolonged by about 20 seconds and the samples were not self-extinguishing according to the results of combustibility test, however, the article treated under the above conditions can be used as a black-colored article owing to the blackened surface, similar to the black-painted or black-mass colored article.

### Example 13, Comparative Example 6

The treatment was carried out under the condition of the Example 9 provided that hydrogen bromide was used in place of hydrogen chloride. The ratios of weight increase and combustibilities were measured with the treatment periods and compared with those of samples treated without introducing hydrogen bromide. The results are collectively shown in the Table 3.

Different from the case of hydrogen chloride, the ratio of weight increase is larger, although a little, in the sample with the introduction of hydrogen bromide, suggesting the increase in the addition of bromine. However, the self-distinguishing property cannot be attained until the treatment is continued for 2 hours or longer. Accordingly, the effect is inferior to the case of hydrogen chloride treatment to an extent. It is generally recognized that the flame-retarding effect of the introduction of halogen atom is larger for bromine

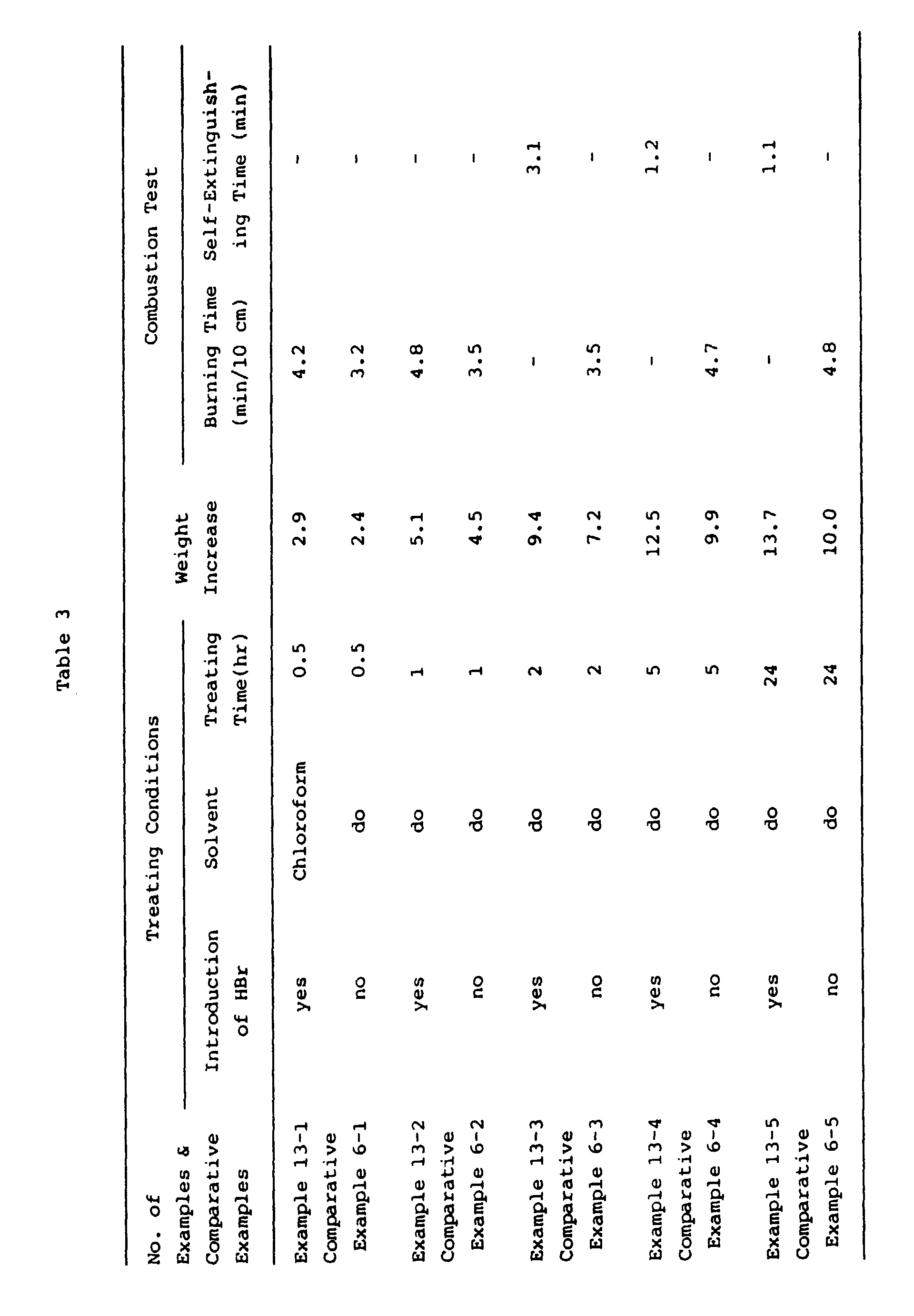

than for chlorine. The results of the present example suggest that the flame-retarding effect of the hydrogen halide treatment of the present invention is caused not merely by the addition of the halogen atom.

### Example 14-15, Comparative Example 7

### <Preparation of molded plate for halogenated hydrocarbon treatment>

The molded plated was prepared as it is described in Example 1-8.

### <Treatment with halogenated hydrocarbon>

The molded plate prepared above was cut to form sample plates having a dimension of 12.5 cm x 1.25 cm. The sample plates were immersed in trichlorobromomethane at room temperature for 3 hours and 5 hours. The weights of the treated plates were increased by 23% and 43%, respectively. The weights were gradually decreased by the treatment in air at 75°C and reached constant after 48 hours. The ratios of the weight increase were measured to be 19-36%, respectively.

The rectangular piece of the treated sample was clamped at an end with a clamp and held in horizontal state. The other end of the sample was ignited with a gas burner for 30 seconds and the period to burn 10 cm of the sample after the start of ignition or, if the sample was extinguished in the middle, the period from the ignition to the extinguishment and the length burnt before extinguishment were measured. The similar combustion test was carried out on an untreated molded plate for comparison and the period to burn 10 cm of the plate was also measured. The untreated sample (Comparative Example 3) was burnt out within 2.7 minutes while the burnt lengths and periods of the samples treated for 3 hours and 5 hours were 8 cm and 1.4 minutes and 7.5 cm and 1.7 minutes, respectively. The improvement of flame-retardance is apparent from the above results.

### Examples 16-17

Molded plates same as those of the Example 9 were immersed for 3 hours in solvents produced by mixing trichlorobromomethane with 5 wt.% of benzoyl peroxide or with 5 wt.% of t-butyl hydroperoxide in place of using pure trichlorobromomethane.

The treated samples were heated at 75°C under reduced pressure. The weight of the sample became constant after 8 hours and the ratios of weight increase were 15% and 18%, respectively. The samples were subjected to combustion test similar to the above examples and the flame were extinguished after 1.2 minutes at a length of 7 cm and after 0.9 minutes at a length of 8 cm, respectively.

The improvement of the flame-retardance is apparent from the above results.

## Claims

1. A process for producing a flame-retarded and/or surface modified polymer molded article wherein a crosslinked polymer molded article is produced by the simultaneous polymerization and molding of at least one kind of metathesis polymerizable cycloolefins in the presence of a metathesis polymerization catalyst, and said molded article:
i) is contacted with a halogen molecule,
ii) is contacted with a hydrogen halide,
iii) is contacted with a halogenation agent which is sulfuryl chloride or a hydrohalogenation agent which is selected from ammonium chloride and/or fumaryl chloride,
or iv) is contacted with a halogenated hydrocarbon
which is at least one compound selected from the group consisting of trichlorobromomethane, carbon tetrachloride, carbon tetrabromide, 1,1,1,2-tetrachloro-1,2-dibromoethane, hexachlorocyclopentadiene, brominated benzyl chloride, dichlorodi(brominated phenyl)methane, hexachloro-p or -m-xylene,and chloroform,
and said molded article is treated with said halogenated hydrocarbon under the condition to enable the reaction of the halogenated hydrocarbon with the unsaturated bond in the crosslinked polymer by the radical chain transfer reaction.

2. A process of claim 1 wherein the halogen molecule is at least one molecule selected from the group consisting of the molecule of bromine, the molecule of chlorine, the molecule of iodine and molecule of fluorine.

3. A process of claim 1 wherein the hydrogen halide is at least one compound selected from the group consisting of hydrogen chloride, hydrogen bromide, hydrogen fluoride and hydrogen iodide.

4. A process of claim 1 wherein said article is treated with the halogenated hydrocarbon in the presence of a radical initiator.

5. A process of claim 1 or4 wherein said article is treated by heating in the air at a temperature of from 50 to 90°C.

6. A process of claim 1 wherein metathesis polymerizable cycloolefin is selected from the group consisting of dicyclopentadiene, tricyclopentadiene, 1,4,5,8-dimethano-1,4,4a,5,8,8a-hexahydronaphthalene, cyclopentadiene oligomer, 1,4,5,8,9,10-trimethano-1,4,4a,5,8,8a,9,9a,10,10a-decahydroanthracene, 1,2-addition compound of 1,5-cyclooctadiene and cyclopentadiene, ethylenebisnorbornene and phenylenebisnorbornene.

7. A process of claim 1 wherein metathesis polymerizable cycloolefin is selected from the group consisting of dicyclopentadiene, tricyclopentadiene and cyclopentadiene oligomer.

8. A process of claim 1 wherein said article is contacted in a solvent with the halogen molecule, the hydrogen halide, the halogenation agent or the hydrohalogenation agent, said solvent being able to swell said article and dissolve the halogen molecule, the hydrogen halide, the halogenation agent or the hydrohalogenation agent.

## Patentansprüche

1. Verfahren zur Herstellung eines flammhemmenden und/oder oberflächenmodifizierten Polymerformteils, worin ein vernetztes Polymerformteil durch die gleichzeitige Polymerisation und Formung von mindestens einer Art von Metathese-polymerisierbaren Cycloolefinen in der Gegenwart von einem Metathese-Polymerisations-Katalysator hergestellt wird und das Formteil:
i) mit einem Halogenmolekül in Kontakt gebracht wird,
ii) mit einem Halogenwasserstoff in Kontakt gebracht wird,
iii) mit einem Halogenierungsmittel, das Sulfurylchlorid ist, oder einem Hydrohalogenierungsmittel ausgewählt aus Ammoniumchlorid und/oder Fumarylchlorid in Kontakt gebracht wird, oder
iv) mit einem halogenierten Kohlenwasserstoff, der mindestens eine Verbindung ausgewählt aus der Gruppe bestehend aus Trichlorbrommethan, Kohlenstofftetrachlorid, Kohlenstofftetrabromid, 1,1,1,2-Tetrachlor-1,2-dibromethan, Hexachlorcyclopentadien, bromiertes Benzylchlorid, Dichlor-di(bromiertes Phenyl)methan, Hexachlor-p- oder -m-xylol und Chloroform ist, in Kontakt gebracht wird und das Formteil mit dem halogenierten Kohlenwasserstoff unter der Bedingung behandelt wird, um die Reaktion des halogenierten Kohlenwasserstoffs mit der ungesättigten Bindung in dem vernetzten Polymer durch die Radikalketten-Übertragungsreaktion zu ermöglichen.

2. Verfahren nach Anspruch 1, worin das Halogenmolekül mindestens ein Molekül ist ausgewählt aus der Gruppe bestehend aus dem Brommolekül, dem Chlormolekül, dem Iodmolekül und dem Fluormolekül.

3. Verfahren nach Anspruch 1, worin der Halogenwasserstoff mindestens eine Verbindung ist ausgewählt aus der Gruppe bestehend aus Chlorwasserstoff, Bromwasserstoff, Fluorwasserstoff und Iodwasserstoff.

4. Verfahren nach Anspruch 1, worin das Teil mit dem halogenierten Kohlenwasserstoff in der Gegenwart eines Radikal-Initiators behandelt wird.

5. Verfahren nach Anspruch 1 oder 4, worin das Teil durch Erwärmung in der Luft auf eine Temperatur von 50 bis 90°C behandelt wird.

6. Verfahren nach Anspruch 1, worin das Metathese-polymerisierbare Cycloolefin ausgewählt ist aus der Gruppe bestehend aus Dicyclopentadien, Tricyclopentadien, 1,4,5,8-Dimethano-1,4,4a,5,8,8a-hexahydronaphthalin, einem Cyclopentadien-Oligomer, 1,4,5,8,9,10-Trimethano-1,4,4a,5,8,8a,9,9a,10,10a-decahydroanthracen, einer 1,2-Additionsverbindung von 1,5-Cyclooctadien und Cyclopentadien, Ethylenbisnorbornen und Phenylenbisnorbornen.

7. Verfahren nach Anspruch 1, worin das Metathese-polymerisierbare Cycloolefin ausgewählt ist aus der Gruppe bestehend aus Dicyclopentadien, Tricyclopentadien und einem Cyclopentadien-Oligomer.

8. Verfahren nach Anspruch 1, worin das Teil in einem Lösungsmittel mit dem Halogenmolekül, dem Halogenwasserstoff, dem Halogenierungsmittel oder dem Hydrohalogenierungsmittel in Kontakt gebracht wird, wobei das Lösungsmittel in der Lage ist, das Teil aufzuquellen und das Halogenmolekül, den Halogenwasserstoff, das Halogenierungsmittel oder das Hydrohalogenierungsmittel zu lösen.

## Revendications

1. Procédé de production d'un article moulé polymère modifié en surface et/ou ignifuge, dans lequel un article moulé polymère réticulé est produit par la polymérisation et le moulage simultanés d'au moins un type de cyclo-oléfines polymérisables par métathèse en présence d'un catalyseur de polymérisation par métathèse, et ledit article moulé:
i) est mis en contact avec une molécule d'halogène;
ii) est mis en contact avec un halogénure d'hydrogène;
iii) est mis en contact avec un agent d'halogénation qui est le chlorure de sulfuryle ou un agent d'hydrohalogénation qui est choisi parmi le chlorure d'ammonium et/ou le chlorure de fumaryle,
ou
iv) est mis en contact avec un hydrocarbure halogéné qui est au moins un composé choisi dans le groupe formé par le trichlorobromométhane, le tétrachlorure de carbone, le tétrabromure de carbone, le 1,1,1,2-tétrachloro-1,2-dibromoéthane, l'hexachlorocyclopentadiène, le chlorure de benzyle bromé, le dichlorodi(phényl bromé)méthane, l'hexachloro-p- ou -m-xylène, et le chloroforme,
et ledit article moulé est traité avec ledit hydrocarbure halogéné dans les conditions permettant la réaction de l'hydrocarbure halogéné avec la liaison insaturée dans le polymère réticulé par réaction de transfert de chaîne radicalaire.

2. Procédé selon la revendication 1, dans lequel la molécule d'halogène est au moins une molécule choisie dans le groupe formé par la molécule de brome, la molécule de chlore, la molécule d'iode et la molécule de fluor.

3. Procédé selon la revendication 1, dans lequel l'halogénure d'hydrogène est au moins un composé choisi dans le groupe formé par le chlorure d'hydrogène, le bromure d'hydrogène, le fluorure d'hydrogène et l'iodure d'hydrogène.

4. Procédé selon la revendication 1, dans lequel ledit article est traité avec l'hydrocarbure halogéné en présence d'un amorceur radicalaire.

5. Procédé selon la revendication 1 ou 4, dans lequel ledit article est traité par chauffage dans l'air à une température comprise entre 50 et 90°C.

6. Procédé selon la revendication 1, dans lequel la cyclo-oléfine polymérisable par métathèse est choisie dans le groupe formé par le dicyclopentadiène, le tricyclopentadiène, le 1,4,5,8-diméthano-1,4,4a,5,8,8a-hexahydronaphtalène, les cyclopentadiènes oligomères, le 1,4,5,8,9,10-triméthano-1,4,4a,5,8,8a,9,9a,10,10a-décahydroanthracène, le composé d'addition en 1,2 du 1,5-cyclo-octadiène et du cyclopentadiène, l'éthylènebisnorbornène et le phénylènebisnorbornène.

7. Procédé selon la revendication 1, dans lequel la cyclo-oléfine polymérisable par métathèse est choisie dans le groupe formé par le dicyclopentadiène, le tricyclopentadiène et les cyclopentadiènes oligomères.

8. Procédé selon la revendication 1, dans lequel ledit article est mis en contact dans un solvant avec la molécule d'halogène, l'halogénure d'hydrogène, l'agent d'halogénation ou l'agent d'halohydratation, ledit solvant étant capable de gonfler ledit article et de dissoudre la molécule d'halogène, l'halogénure d'hydrogène, l'agent d'halogénation ou l'agent d'halohydratation.
